# EUROPEAN PATENT APPLICATION

(11) **EP 4 497 985 A1**
(43) Date of publication of application: **29.01.2025**
(21) Application number: 24190670.0
(22) Date of filing: 24.07.2024
(51) Int. Cl.: F16L 9/18, F16L 55/07

(54) **DOUBLE-WALL PIPE FOR AN AIRCRAFT FUEL SYSTEM**

(30) Priority: 24.07.2023 GB 202311353
(71) Applicant: Airbus Operations Limited, Bristol BS34 7PA (GB); AIRBUS Operations GmbH, 21129 Hamburg (DE); AIRBUS OPERATIONS (S.A.S), 31060 Toulouse (FR)
(72) Inventor: BRYANT, Anthony, Bristol, BS34 7PA (GB); KOLLO, Philipp, 21129 Hamburg (DE); MILLIERE, Jérôme, 31060 Toulouse (FR)
(74) Representative: EIP

(57) **Abstract**

Disclosed is a double-wall pipe for an aircraft fuel system. The double-wall pipe comprises an inner wall defining a first open end, a second open end, and an inner region connecting the first open end to the second open end and via which a fuel is flowable through the double-wall pipe, in use. The double-wall pipe also comprises an outer wall disposed at least in part around the inner wall to define an interspace, between the inner wall and the outer wall, that is fluidically isolated from the inner region. The double-wall pipe further comprises at least one barrier that is openable to create a passage that fluidically connects the interspace to the inner region. The at least one barrier is configured to open when a pressure in the interspace is higher than a pressure in the inner region.

## Description

### TECHNICAL FIELD

The present invention relates to double-wall pipes for aircraft fuel systems, aircraft fuel systems comprising such double-wall pipes, and aircraft comprising such aircraft fuel systems.

### BACKGROUND

Aircraft fuel systems typically comprise a fuel source, such as a fuel tank, and one or more supply lines for supplying fuel from the fuel source to one or more engines of the aircraft. The fuel lines may be configured to transfer fuel to different locations in the aircraft. For instance, the fuel source may be in an aft portion of a fuselage of the aircraft, whereas the, or each, engine may be located on a wing of the aircraft.

Some aircraft fuel systems are configured to utilise liquid hydrogen fuel, which may be stored in and transferred through the aircraft fuel system under cryogenic conditions and/or at high pressures. The liquid hydrogen fuel may also be stored in and transferred through the fuel system in or close to a saturated state, such as at temperatures and pressures which are close to respective saturation temperatures and saturation pressures associated with the liquid hydrogen fuel.

### SUMMARY

A first aspect of the present invention provides a double-wall pipe for an aircraft fuel system, the double-wall pipe comprising: an inner wall defining a first open end, a second open end, and an inner region connecting the first open end to the second open end and via which a fuel is flowable through the double-wall pipe, in use; an outer wall disposed at least in part around the inner wall to define an interspace, between the inner wall and the outer wall, that is fluidically isolated from the inner region; and at least one barrier that is openable to create a passage that fluidically connects the interspace to the inner region; wherein the at least one barrier is configured to open when a pressure in the interspace is higher than a pressure in the inner region.

Providing the at least one barrier (which may herein be referred to as an "openable barrier") between the interspace and the inner region may allow a pressure difference between the interspace and the inner region to be reduced by opening the at least one barrier. This may in turn reduce a likelihood of a loss of integrity of the inner wall and/or the outer wall due to such a pressure difference. In other words, the at least one openable barrier may provide a fail-safe in the event of an abnormal increase in pressure in the interspace.

The barrier may be configured to remain closed when the pressure in the interspace is less than the pressure in the inner region. In particular, the barrier may be configured to open only in one direction. That is, the barrier may be configured to open to permit a flow of fuel through the passage in only one direction, from the interspace to the inner region. This may be by a component of the at least one barrier being openable, or rupturable, only when a pressure on a side of the component in fluid communication with the interspace is greater than a pressure on a side of the component in fluid communication with the inner region. For instance, the barrier may comprise a check valve which opens only in one direction, and/or a rupture disc which is preferentially rupturable in only one direction. Providing such a unidirectionally openable barrier may allow a higher pressure to be maintained in the inner region than in the interspace during normal operation.

Providing the barrier that is configured to open when the pressure in the interspace is greater than the pressure in the inner region may be particularly advantageous for use in an aircraft hydrogen fuel system. Liquid hydrogen fuel, in order to remain in a liquid phase, may need to be maintained under cryogenic conditions. Exposure to higher temperatures may cause the liquid hydrogen fuel to transition into a gaseous phase and expand. This may cause an increase in pressure of the hydrogen fuel.

This may occur, for example, in the event of a break in the inner wall that allows fuel to pass from the inner region into the interspace. In such a case, hydrogen fuel which has escaped into the interspace may contact the outer wall, which may be less thermally insulated than the inner wall from an atmosphere surrounding the outer wall (e.g., when there is no further vacuum created around the outer wall, or when an outer surface of the outer wall is in contact with ambient air). The ambient air is likely to be at a higher temperature than the hydrogen fuel in the double-wall pipe, which is maintained at or close to saturated conditions (e.g., under cryogenic conditions). As such, contact of the hydrogen fuel with the outer wall may cause an increase in temperature of the hydrogen fuel in the interspace, which may vaporise some or all of the hydrogen fuel in the interspace. This, in turn, may increase a pressure in the interspace, particularly when the break in the inner wall is small enough to restrict a flow of the hydrogen gas from the interspace back into the inner region The at least one barrier may therefore be openable to better distribute pressure in the double-wall pipe in the event of an increase in pressure in the interspace, such as due to evaporation of liquid hydrogen in the interspace. In this way, the outer wall may be provided absent a vent for releasing pressure in the interspace to an atmosphere external to the double-wall pipe. This may also avoid the need for a system for venting vapour away from the atmosphere surrounding the outer wall, for example to an exhaust port external to the fuel system and/or the aircraft. These factors may, in turn, reduce a weight, cost and/or complexity of a fuel system comprising the double-wall pipe.

The barrier be openable to provide the passage through the inner wall, which may provide a compact arrangement in the double-wall pipe.

Optionally, the barrier is configured to open when the pressure in the interspace is higher than the pressure in the inner region by an amount greater than a threshold pressure difference. This may allow the at least one barrier to be openable passively in the event of an increase in the pressure difference between the interspace and the inner region. This may provide a simple, self-contained arrangement which does not require any external input, such as from control circuitry, to operate. This may reduce possible failure modes of the at least one barrier, and/or may reduce a cost, weight, and/or complexity of the double-wall pipe.

Optionally, the barrier is configured to remain closed when the pressure in the inner region is greater than the pressure in the interspace by an amount equal to or greater than the threshold pressure difference.

For instance, the inner region may carry fuel, such as pressurised hydrogen fuel, in an aircraft fuel system. A vacuum (or another pressure lower than that in the inner region) may be maintained in the interspace, such as to thermally insulate the fuel in the inner region from an atmosphere surrounding the outer wall, which may be at a higher temperature than the fuel passing through the double-wall pipe, in use. In such a case, an increase in a pressure difference between the inner region and the interspace, such as due to an increase in pressure in the inner region but not in the interspace, may not cause the barrier to open. This may, in turn, allow the vacuum to be maintained in the interspace.

The barrier may thus only open, or rupture, in the event of a pressure increase in the interspace, relative to the inner region, that causes a pressure difference between the interspace and the inner region to exceed the threshold pressure difference. This may occur due to a break, or rupture, in the inner wall that causes fuel to pass into the interspace, as discussed above.

The at least one barrier may therefore be openable to allow fuel in the interspace to pass back into the inner region, to reduce a pressure in the interspace. This may reduce a pressure acting on the outer wall, which may reduce a likelihood of a loss of integrity of the outer wall. Such an arrangement, as noted above, may allow a pressure in the interspace to be reduced without requiring a vent system to vent fuel in the interspace to an atmosphere external to the double-wall pipe, and/or external to fuel system and/or the aircraft. This may improve a safety of the double-wall pipe and/or a fuel system comprising the double-wall pipe. This may also reduce a cost, weight, and/or complexity of the double-wall pipe and/or such a fuel system comprising the double-wall pipe.

Optionally, the threshold pressure difference is lower than a burst pressure difference between the interspace and an outer region surrounding the outer wall. Optionally, the burst pressure difference is a pressure difference between the interspace and an outer region that would cause, or would increase a risk of, a partial of full loss of integrity of the outer wall. For instance, the burst pressure difference may be a pressure difference that may increase a risk of a rupture of the outer wall, such as a rated pressure difference between the interspace and the outer region.

By ensuring the threshold pressure difference is lower that the burst pressure difference, the at least one barrier may reduce the pressure in the interspace before it becomes large enough to cause damage to the outer wall. This may help to ensure that no fuel can escape through the outer wall into the outer region. This, in turn, may improve a safety of the double-wall pipe, particularly when the fuel is liquid hydrogen.

Optionally, the at least one barrier comprises a rupturable barrier. In other words, the at least one barrier may not be resealable once opened. Such a rupturable barrier may have no moving parts, or fewer moving parts than, for instance, an openable and closable valve. Fewer moving parts may reduce a likelihood of gas leakage through the at least one barrier, and/or may improve a reliability and/or lifespan of the at least one barrier. This may be particularly advantageous for use in an aircraft hydrogen fuel system, as hydrogen particles are smaller than conventional (e.g., Kerosene) fuel particles, and so may otherwise leak through smaller gaps and spaces than conventional fuel particles. Moreover, providing a rupturable barrier with fewer, or no, moving parts may also reduce a cost, weight and/or complexity of the double-wall pipe and/or a fuel system comprising the double-wall pipe.

Optionally, the at least one barrier comprises a rupture disc. The rupture disc would comprise the rupturable barrier, where provided. For instance, the rupturable barrier may comprise a membrane that fails at a predetermined differential pressure across the membrane, such as the threshold pressure difference, where provided. In such a case, it will be appreciated that the membrane may withstand a pressure difference between the interspace and the inner region that causes a first force to act on the membrane in a first direction, from the inner region towards the interspace, but may rupture in the event of a pressure difference between the interspace and the inner region that causes a second force, having a magnitude less than a magnitude of the first force, to act on the membrane in a second direction, from the interspace towards the inner region.

The rupture disc may provide an almost-instant response to a rapid increase in the pressure difference between the interspace and the inner region, which may improve a resilience of the double-wall pipe to a failure associated with the inner wall separating the interspace and the outer region. The rupture disc may, compared to other barriers such as electronic valves or check valves, may have fewer moving parts, reduced size, cost, and/or weight, improved ease of maintenance, improved response times, and/or improved leaktightness. The rupture disc may therefore provide an efficient and reliable solution to mitigating adverse effects of pressure differences between the interspace and the inner region.

Optionally, a vacuum, or partial vacuum, is present in the interspace. As noted above, this may improve thermal insulation of fuel, which may be cryogenic liquid hydrogen, flowing in the inner region in use. The barrier being openable in only one direction may allow such a vacuum to be maintained in the interspace even when high pressure fuel is passed through the inner region.

Optionally, the at least one barrier comprises a plurality of barriers, and each one of the plurality of barriers is openable to create a respective passage that fluidically connects the interspace to the inner region. For instance, the double-wall pipe may comprise a pair of barriers, each barrier being openable to create a respective passage - such as a respective passage through the inner wall - between the interspace and the inner region. This may provide improved redundancy, such as in the event of a failure of one of the pair of barriers.

Optionally, the pair of barriers, where provided, are disposed on opposite sides of the inner region from each other. Alternatively, the pair of barriers may be disposed axially adjacent to each other in relation to the inner wall.

Optionally, the interspace is a first interspace, and the outer wall defines a second interspace, between the inner wall and the outer wall, that is fluidically isolated from the inner region and the first interspace.

The second interspace may be axially adjacent to the first interspace. In such a case, the double-wall pipe may comprise a seal, such as an annular seal, separating the first and second interspaces. Alternatively, the second interspace may be circumferentially adjacent to the first interspace. The first and second interspaces may be diametrically opposed. When the first and second interspaces are circumferentially adjacent and/or diametrically opposed, the seal, where provided, may comprise one or more axial seals separating the first and second interspaces.

By isolating the first and second interspaces from each other, in the event of a failure that causes a change in pressure in one of the first and second interspaces, a pressure may be maintained in the other of the first and second interspaces. This may restrict propagation of a failure associated with either the first or the second interspace to other parts of the double-wall pipe, such as the other of the first interspace and the second interspace, or to other parts of a system comprising the double-wall pipe.

It will be appreciated that the second interspace may benefit from any of the optional features and/or advantages associated with the first interspace described above.

Optionally, the at least one barrier comprises at least one first-interspace barrier, the passage comprises a first-interspace passage that fluidically connects the first interspace to the inner region, and the double-wall pipe comprises at least one second-interspace barrier that is openable to create a second-interspace passage that fluidically connects the second interspace to the inner region.

The first- and second-interspace barriers may be fluidically connected to each other at their outlets via the inner region. In other words, each of the first and second interspaces may be fluidically connectable, via the respective first- and second-interspace barriers, to the same inner region defined by the inner wall.

In this way, each of the first- and second-interspace barriers may be openable to equalise a pressure, and/or to reduce a pressure difference, between the inner region and the respective first and second interspaces. This may allow a pressure increase in one of the first and second interspaces, for instance due to a failure of a part of the inner wall separating the inner region from the respective one of the first and second interspaces, to be reduced without affecting the pressure in the other of the first and second interspaces. This may improve a safety and/or reliability of the double-wall pipe.

Optionally, the at least one second-interspace barrier comprises a plurality of second-interspace barriers.

It will be appreciated that the at least one second-interspace barrier may benefit from any of the optional features and/or advantages associated with the first-interspace barrier described above.

Optionally, the outer wall defines one or more further interspaces, between the inner wall and the outer wall, wherein the, or each, further interspace is fluidically isolated from the inner region.

Optionally, the, or each, further interspace is fluidically isolated from each other interspace defined between the inner and outer walls. For instance, the one or more further interspaces may comprise a third interspace, adjacent to or spaced from the first and/or the second interspace, and fluidically isolated from the first interspace and the second interspace. The third interspace may be axially or circumferentially adjacent to one or both of the first and second interspaces.

It will be appreciated that the, or each, further interspace may benefit from any of the optional features and/or advantages associated with the first and/or the second interspace described above.

The double-wall pipe may comprise one or more further-interspace barriers. The, or each, further-interspace barrier may be openable to create a respective further-interspace passage that fluidically connects a respective further interspace to the inner region. Optionally, the one or more further-interspace barriers comprises one or more sets (e.g., pairs) of further-interspace barriers. Optionally, each barrier in a set of further-interspace barriers is openable to create a respective further-interspace passage that fluidically connects one of the one or more further interspaces to the inner region.

It will be appreciated that the, or each, further barrier may benefit from any of the optional features and/or advantages associated with the first and/or the second barrier described above.

A second aspect of the present invention provides an aircraft fuel system comprising: a fuel tank for storing fuel for an engine of an aircraft; and the double-wall pipe of the first aspect of the present invention fluidically connected, or connectable, to the fuel tank.

The double-wall pipe may be configured so that fuel is passable through the inner region into the fuel tank from a fuelling system for supplying fuel to the fuel tank. Alternatively, or in addition, the double-wall pipe may be configured so that fuel is passable through the inner region from the fuel tank to one or more components downstream of the fuel tank, such as towards one or more engines of the aircraft.

The aircraft fuel system may comprise a fuel supply unit comprising the fuel tank and one or more fluid movers for moving fluid from the fuel tank towards the one or more engines. The fuel supply unit may comprise a sealed housing within which the fuel tank and the one or more fluid movers are located. The sealed housing may fluidically isolate the fuel tank and the one or more fluid movers from an atmosphere surrounding the fuel supply unit. The double-wall pipe may be configured so that fuel is passable through the inner region from the fuel supply unit towards the one or more engines.

In this way, the fuel supply unit may contain any fuel leaks from the tank, the fluid movers, and/or other components within the sealed housing of the fuel supply unit. This, in turn, may allow pipes other than the double-walled pipe to be used within the fuel supply unit, which may reduce a cost, weight and/or complexity of the fuel supply system. The double-wall pipe which, as discussed above, is designed to reduce a risk of a fuel leak therefrom, even in the event of a breakage of the inner pipe, may then be connected to pass fuel outside of the sealed housing, though a region that is not otherwise sealed from the atmosphere surrounding the sealed housing. Alternatively, or in addition, the fuel supply unit may comprise the double-walled pipe, which may further reduce a risk of a fluid leak into the atmosphere surrounding the fuel supply unit.

It will be appreciated that the aircraft fuel system may comprise any suitable number of such double-wall pipes for passing fuel between components of the aircraft fuel system and/or other systems associated with the aircraft.

Optionally, the aircraft fuel system comprises at least one pressure relief valve configured to fluidically connect the inner region to an atmosphere external to the double-wall pipe.

The at least one pressure relief valve may permit excess pressure generated in the inner pipe, following a rupture of the inner wall and/or opening of the at least one barrier, to be relieved and/or vented to the external atmosphere. This may improve a safety of the double-wall pipe. Optionally, the at least one pressure relief valve comprises two or more pressure relief valves. This may provide improved redundancy in the event of a failure of one of the pressure relief valves.

Optionally, the aircraft fuel system comprises an exhaust located external to the double-wall pipe, and the at least one pressure relief valve is fluidically connected to the exhaust. Optionally, the exhaust is configured to vent fuel received from the at least one pressure relief valve to an atmosphere external to the aircraft. In this way, hydrogen fuel may be safely vented away from the aircraft and/or components of the fuel system or the engine of the aircraft.

Optionally, the aircraft fuel system comprises liquid hydrogen fuel in the fuel tank. The fuel tank may comprise a sealed pressure vessel configured to store the liquid hydrogen fuel. The aircraft fuel system may comprise thermal insulation surrounding at least a part of the fuel tank. The thermal insulation may comprise a vacuum and/or any other suitable thermally-insulating material. The aircraft fuel system may comprise a temperature control system for adjusting and/or maintaining a temperature of the fuel in the fuel tank. This may allow the liquid hydrogen to be better maintained under cryogenic conditions, which may increase a quality of fuel in the fuel tank and/or fuel which is passed to the engine.

A third aspect of the present invention provides an aircraft comprising the double-wall pipe of the first aspect of the present invention, or the aircraft fuel system of the second aspect of the present invention.

The aircraft may comprise one or more engines, and the double-wall pipe may be configured so that fuel is passable towards the one or more engines through the inner region. The aircraft fuel system, where provided, may be configured to supply fuel to the one or more engines, where provided.

The aircraft may comprise and/or benefit from any of the optional features and/or advantages associated with the double-wall pipe of the first aspect or the fuel system of the second aspect described above.

It will be appreciated that features associated with any of the first, second and third aspects may be combined with features associated with any other of the first, second and third aspects as appropriate to particular implementations of the invention.

### BRIEF DESCRIPTION OF THE DRAWINGS

Embodiments of the invention will now be described, by way of example only, with reference to the accompanying drawings, in which:
Figure 1 shows a schematic view of an example aircraft;
Figure 2 shows a schematic view of an example fuel system of the aircraft of Figure 1;
Figure 3 shows a schematic view of an example fuel line of the fuel system of Figure 2; and
Figures 4A to 4C show schematic views of example constructions of a rupture disc of the fuel line of Figure 3.

### DETAILED DESCRIPTION

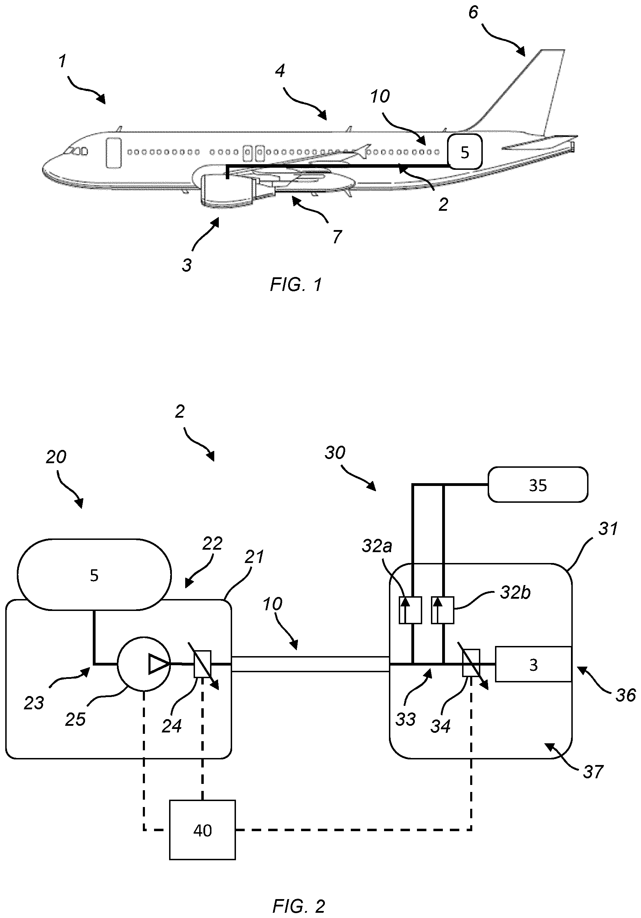

Figure 1 shows an example aircraft 1 comprising a fuel system 2 and an engine 3. The fuel system 2 here is a liquid hydrogen fuel system and is at least partly located towards an aft end of a fuselage 4 of the aircraft 1. In particular, the fuel system 2 comprises a fuel tank 5 located at least partly in a tail 6 of the aircraft. The engine 3 is located on a wing 7 of the aircraft 1. The aircraft fuel system 2 comprises a fuel line 10 for transferring fuel from the fuel tank 5 to the engine 3. It will be appreciated that, in other examples, the fuel tank 5 and/or the engine 3 may be located in any other suitable location on or in the aircraft. The aircraft 1 may also comprise more than one engine 3 and/or more than one fuel tank 5. The fuel tank 5 is here a double-wall fuel tank comprising a cavity wall defining a cavity for storing fuel, and a shell surrounding the cavity wall to define a space between the cavity wall and the shell. The space comprises a vacuum, which thermally insulates fuel in the cavity. This arrangement reduces a likelihood of a fuel leak from the fuel tank, such as due to a rupture in the cavity wall.

The aircraft fuel system 2 is shown in more detail in the schematic diagram of Figure 2. The aircraft fuel system 2 comprises a fuel supply unit 20 comprising a sealed housing 21. "Sealed" here means that an interior space 22 defined by the sealed housing is fluidically isolated from an atmosphere surrounding the sealed housing 21. The fuel supply unit 20 comprises the fuel tank 5 to which the sealed housing 21 is mounted, and a centrifugal pump 25 in the sealed housing 21. The sealed housing 21 is defined by a single wall, and reduces a likelihood of fuel leaking from components in the sealed housing 21, such as the centrifugal pump 25, to the atmosphere surrounding the sealed housing 21. While the sealed housing 21 is shown mounted to the fuel tank 5, in other examples, the fuel tank 5 may be enclosed by the sealed housing 21, which may further reduce a likelihood of fuel leaking from the fuel tank 5 to the atmosphere surrounding the sealed housing 21. Returning to Figure 2, the fuel supply system comprises a control system 40 configured to issue a pump control signal to cause operation of the centrifugal pump 25 to cause fuel to move from the fuel tank 5 towards the engine 3. In other words, the control unit 40 is communicatively coupled to the centrifugal pump 25.

The fuel tank 5 is fluidically connected to the centrifugal pump 25 by a fuel tank line 23, which here is a single-wall pipe. The pump 25 causes fuel to move through the fuel line 10 via a first isolator 24. The first isolator 24 is operable by a first-isolator control signal received from a control system 40 to selectively permit or prevent a flow of fuel from the centrifugal pump 25 and/or the fuel tank 5 to the fuel line 10. In other words, the control system 40 is communicatively coupled to the first isolator 24.

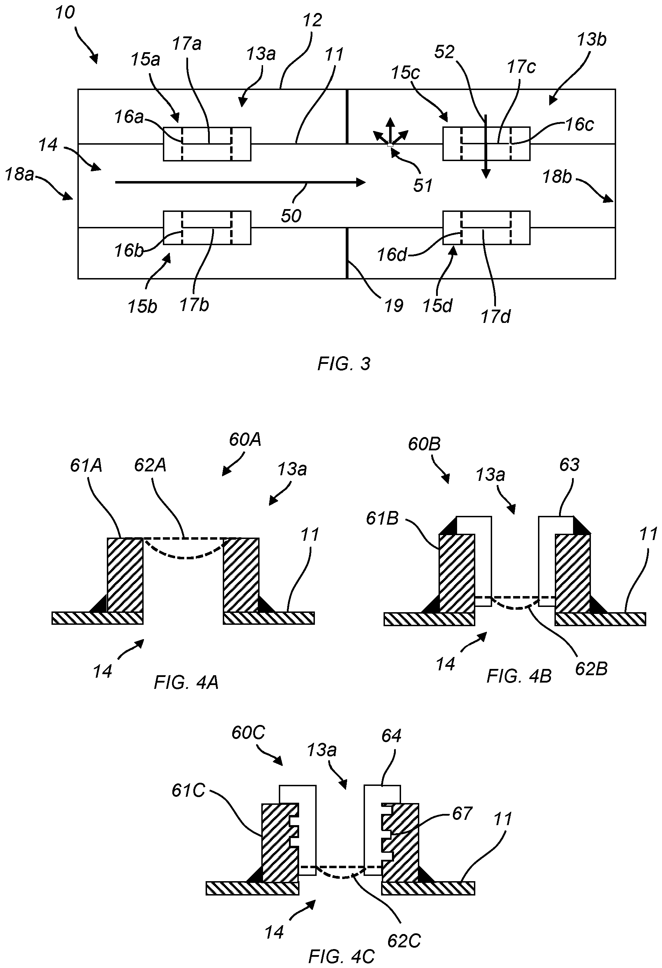

The fuel line 10 will be described in more detail below with respect to Figure 3.

The engine 3 is a part of an engine unit 30 of the aircraft 1. The engine unit 30 comprises a nacelle 31 defining an engine compartment 37. The nacelle 31 here provides a sealed housing defining the engine compartment 37, but, in other examples, the engine compartment 37 is, in part, open to an atmosphere surrounding the nacelle 31. The engine unit 30 comprises the engine 3. The engine 3 comprises an outlet 36 which is open to an atmosphere surrounding the engine unit 30, so that exhaust gasses are passable from the engine 3 to the atmosphere surrounding the engine unit 30 to provide at least some of the motive force for moving the aircraft 1, as will be known to a person skilled in the art.

The engine unit 30 comprises an engine line 33 configured to receive fuel from the fuel supply unit 20 via the fuel line 10. The engine unit 30 comprises a second isolator 34 which is operable by a second-isolator control signal received from the control system 40 to selectively permit or prevent a flow of fuel to the engine 3 from the engine line 33. In other words, the control system 40 is communicatively coupled to the second isolator 34. The engine unit 30 also comprises a first pressure relief valve 32a and a second pressure relief valve 32b, each fluidically connecting the engine line 30 to an exhaust 35 located external to the nacelle 31. In particular, the exhaust 35 is located in a relatively "safe" environment external to the engine unit 30, and preferably also external to the aircraft 1 as a whole. The first and second pressure relief valves 32a, 32b are configured to vent excess pressure in the fuel system 2, and in particular excess pressure in the fuel line 10 and/or the fuel line 33, via the exhaust 35, to the atmosphere surrounding the nacelle 31.

In some examples, similar pressure relief valves are provided in the fuel line 10, or in the fuel supply unit 20, such as upstream and/or downstream of the centrifugal pump 25 and/or the first isolator 24. Such pressure relief valves may be provided alternatively to, or in addition to, the first and second pressure relief valves 32a, 32b.

Turning now to Figure 3, the fuel line 10 is described in more detail. The fuel line 10 is a double-wall pipe comprising an inner wall 11 defining a first open end 18a, a second open end 18b and an inner region 14 connecting the first open end 18a to the second open end 18b. Fuel is flowable from fuel supply unit 20 to the engine unit 30 via or through the inner region 14. In particular, in use, the fuel is received from the centrifugal pump 25 through the first open end 18a, passes through the inner region 14 in the direction of the arrow labelled 50 in Figure 3, and enters the engine unit 30 through the second open end 18b. In other words, the first open end 18a is fluidically connected to the fuel supply unit 20 to receive fuel stored in the fuel tank 5, and the second open end 18a is fluidically connected to the engine unit 30 to pass fuel from the inner region 14 towards the engine 3.

The fuel line 10 also comprises an outer wall 12 disposed around the inner wall 11 to define a first annular interspace 13a and a second annular interspace 13b between the inner wall 11 and the outer wall 12. The first and second interspaces 13a, 13b are each fluidically isolated from the inner region 14 by the inner wall. The first and second interspaces 13a, 13b are fluidically isolated from each other by an annular seal 19 disposed between the inner wall 11 and the outer wall 12. A vacuum is maintained in each of the first and second interspaces 13a, 13b, so as to thermally insulate liquid hydrogen fuel flowing through the inner region 14, in use, from an external atmosphere surrounding the outer wall. The external atmosphere here is ambient air. The ambient air is at a higher temperature than the liquid hydrogen flowing through the inner region 14, which is maintained at or close to saturated conditions (and, in particular, under cryogenic conditions).

The fuel line 10 comprises first and second diametrically opposed rupture discs 15a, 15b which are each openable to create respective first and second passages 16a, 16b through the inner wall 11 that fluidically connect the first interspace 13a to the inner region 14. The fuel line similarly comprises third and fourth diametrically opposed rupture discs 15c, 15d which are each openable to create respective third and fourth passages 16c, 16d through the inner wall 11 that fluidically connect the second interspace 13b to the inner region 14. The first, second, third and fourth rupture discs 15a, 15b, 15c, 15d comprise respective first, second, third and fourth membranes 17a, 17b, 17c, 17d. Each membrane 17a, 17b, 17c, 17d is configured to rupture in response to a pressure difference across the respective membrane 17a, 17b, 17c, 17d that exceeds a threshold pressure difference.

Taking the third membrane 17c as an example, the third membrane 17c is configured to rupture in response to a pressure difference across the third membrane 17c that results in a force on the third membrane 17c, in a direction from the second interspace 13b to the inner region 14, that exceeds a threshold force. The third membrane 17c is configured to remain closed in response to a pressure difference across the third membrane 17c that results in a force on the third membrane 17c, in a direction from the inner region 14 to the second interspace 13b, having a magnitude which is the same as or greater in magnitude than the threshold force. In particular, the third rupture disc 15c is configured to rupture when a pressure in the second interspace 17c is greater than a pressure in the inner region 14, but to remain closed when a pressure in the inner region 14 is greater than a pressure in the second interspace 13b. This may be referred to as the rupture disc being "unidirectional" and allows the third rupture disc 15c to withstand a pressure difference across the inner wall 11 caused by high-pressure liquid hydrogen fuel flowing through the inner region 14 whilst a vacuum is maintained in the second interspace 13b. The first, second and fourth rupture discs 15a, 15b, 15d are similarly configured to be unidirectional, opening only when a pressure in the corresponding first and second interspaces 13a, 13b is greater than a pressure in the inner region 14.

Returning to the example of the third rupture disc 17c, a pressure in the second interspace 13b may be caused to increase above the pressure of fuel in the inner region 14 in the event of a rupture or breakage 51 of the inner wall. As shown schematically in Figure 3, such a rupture 51 may initially cause fuel to flow from the inner region 14 into the second interspace 13b due to a higher pressure being present in the inner region 14 than in the second interspace 13b. However, as the hydrogen fuel - which may be below, or at or near its saturation temperature and/or pressure in the inner region 14 - enters the second interspace 13b through the rupture 51, it may encounter a rapid drop in pressure, which may cause some, or all, of the hydrogen fuel to vaporise, resulting in a decrease in density of the hydrogen fuel. Moreover, in the second interspace 13b, the hydrogen fuel may encounter an increased rate of heat transfer with an atmosphere surrounding the outer wall 12 due to the loss of vacuum. Thus, the rupture 51 in the inner pipe 11 may lead to a rapid (in the order of milliseconds) increase in the temperature and the pressure in the second interspace 13b. This may cause the pressure in the second interspace 13b to increase to a level at or above that in the inner region 14.

In some cases, when the rupture 51 is large enough, the hydrogen fuel in the second interspace 13b may flow back through the rupture 51 into the inner region to equalise the pressures between the second interspace 13b and the inner region 14. However, if the rupture 51 is small enough, a flow of the hydrogen fuel (which is now in a vaporous phase in the second interspace 13b) back through the rupture 51 may be "choked", thereby restricting an amount of the hydrogen fuel that can flow back into the inner region 14. It will be appreciated that, due to principles of conservation of mass, a smaller rupture 51 may cause a locally higher velocity of gas flowing through the rupture from the third interspace 13b to the inner region 14. Since vaporous, or gaseous, hydrogen fuel is compressible and has a lower density than liquid hydrogen fuel, the local velocity of the hydrogen fuel flowing through the rupture 51 is restricted to sonic velocity of the hydrogen fuel (i.e., a local velocity having a Mach number of 1). Thus, any increase in the pressure in the second interspace 13b beyond that which causes a sonic local velocity of the hydrogen fuel flowing through the rupture 51 will not further increase the flow of hydrogen fuel through the rupture. This phenomenon is known as "choking". If a flow of hydrogen fuel from the second interspace 13b through the rupture 51 becomes choked, further increases in pressure in the second interspace 13b relative to the inner region 14 will not be relieved by an increase in flow rate of the hydrogen fuel through the rupture 51. As such, in the event of a choked flow through the rupture 51, further increases in temperature of hydrogen fuel in the interspace may result in a further increases in the pressure of the hydrogen fuel in the second interspace 13b. For completeness, it is noted that the increase in pressure in the second interspace 13b may cause an increase in the density of the hydrogen fuel in the second interspace 13b, which may in turn increase a mass flow at choked conditions through the rupture 51. However, this effect would likely be insufficient to prevent a further pressure build-up in the second interspace 13b

When the pressure in the second interspace 13b is greater than the pressure in the inner region 14 by an amount that is greater than the threshold pressure difference, the third membrane 17c will rupture, causing the third passage 16c between the second interspace 13b and the inner region 14 to be created. The hydrogen fuel in the second interspace 13b may then pass through the third passage 16c, which has a larger cross-sectional area than the rupture 51 in this example, to reduce the pressure difference between the second interspace 13b and the inner region 14.

The fourth rupture disc 15d is similarly configured to rupture when the pressure difference between the second interspace 13b and the inner region 14 exceeds the threshold pressure difference, and so provides redundancy in the event of a failure of the third rupture disc 15c. Similarly, the first and second rupture discs 15a, 15b are configured to rupture in the event of a pressure difference between the first interspace 13a and the inner region 14 exceeding the threshold pressure difference, such as when a rupture causes the pressure in the first interspace 13a to exceed that in the inner region 14.

It will be appreciated that the threshold pressure difference is less than a burst pressure difference between the respective first and second interspaces 13a, 13b and the atmosphere surrounding the outer wall 12 that would increase a risk of failure of the outer wall 12. In particular, the threshold pressure difference is a predetermined margin lower than the burst pressure, to increase a safety of the fuel supply system 2.

In response to such a rupture 51, the first and/or second isolators 24, 34 may be closed to prevent a back-flow of fuel to the centrifugal pump 25 and/or to prevent gaseous hydrogen fuel flowing towards the engine 3. In some examples, such a rupture may be detected by a change in a pressure in the fuel supply system 2, such as using a pressure sensor (not shown), and/or by a change in temperature in the fuel supply system, such as using a temperature sensor (not shown).

The increased rate of heat transfer between the hydrogen fuel in the fuel line 10 and the atmosphere surrounding the outer wall 12 may cause the hydrogen fuel in the fuel line 10, such as between the first and second isolators 24, 34, when closed, to increase over time. This excess pressure can be vented through the first and second pressure relief valves 32a, 32b to the exhaust 35. As such, it will be appreciated that the first and second pressure relief valves 32a, 32b are also caused to open when a pressure difference across the first and second pressure respective valves 32a, 32b is less than the burst pressure, in order to maintain the integrity of the outer wall 12.

By providing the first, second, third and fourth rupture discs 15a, 15b, 15c, 15d, it is possible to omit pressure relief valves between each of the first and second interspaces 13a, 13b and the atmosphere surrounding the outer wall 12. This leads to a simpler system, requiring only the first and second pressure relief valves 32a, 32b (or even just one pressure relief valve) and associated pipework to vent the hydrogen fuel to the exhaust 35. This is particularly advantageous when the fuel line 10 comprises a larger number of interspaces, which may be the case as a length of the fuel line 10 increases. A larger number of interspaces may allow the effects of a rupture of the inner wall 11 to be localised to a smaller region along the fuel line 10. Providing at least one rupture disc similar to the first to fourth rupture discs 15a, 15b, 15c, 15d for each interspace in the fuel line significantly reduces the number of pressure relief valves and associated pipework which would otherwise be required to vent each of the interspaces to the exhaust 35 (or another exhaust) in the event of a rupture of the inner wall 11.

Figures 4A to 4C show example constructions of a rupture disc, which here is the first rupture disc 15a, but may be any one of the first to fourth rupture discs 15a, 15b, 15c, 15d or any other rupture disc in the fuel line 10. Here, like features from Figures 1 to 3 are provided with like reference numerals in Figures 4A to 4C, for ease of understanding.

Figure 4A shows a first rupture disc 60A comprising a first-disc boss 61A which is welded at a proximal end that is proximal to a the inner wall 11 and a first-disc membrane 62A attached to the first-disc boss 61A. Here, the first-disc membrane 62A is located at an distal end of the first-disc boss 61A distal from inner wall 11, and is concaved towards the inner region 14. The concaved first-disc membrane 62A better resists a pressure acting from the inner region 14 towards the first interspace 13a. This allows a vacuum to be maintained in the first interspace 13a whilst high-pressure fuel is passed through the inner region 14, as discussed above. The first-disc membrane 62A is rupturable in response to a force that pushes the first-disc membrane 62A from the first interspace 13a towards the inner region 14.

Figure 4B shows a second rupture disc 60B comprising a second-disc boss 61B which is welded to the inner wall 11. Here, the second-disc membrane 62B is instead attached to a second-disc plug 63, which in turn is welded to the second-disc boss 61B at a distal end of the second-disc boss 61B distal from the inner wall 11. The second-disc membrane 62B is attached to the second-disc plug 63 at an end of the second-disc plug 63 proximal to the inner wall 11. Otherwise, the second-disc membrane 62B is so shaped and arranged as to function in substantially the same way as the first-disc membrane 62A discussed above in response to a pressure difference between the first interspace 13a and the inner region 14).

Figure 4C shows a third rupture disc 60C comprising a third-disc boss 61C which is welded to the inner wall 11. Here, the third-disc membrane 62C is similarly attached to a third-disc plug 64, but the third-disc plug 64 is instead fixed to the third-disc boss 61C with a threaded connection 67. This may improve an ease of replacement of the third-disc plug 64 and/or the third-disc membrane 62C in the event of a rupture of the third rupture disc 60C. Otherwise, the third-disc membrane 62C is so shaped and arranged as to function in substantially the same way as the second-disc membrane 62B and the first-disc membrane 62A discussed above in response to a pressure difference between the first interspace 13a and the inner region 14.

It will be appreciated that the above examples provided for illustrative purposes only, and that modifications or variations are conceivable within the scope of the invention, as defined by the appended claims.

For instance, while only a first interspace 13a and a second interspace 13b are shown and described above, the fuel line 10 may comprise any other suitable number of interspaces. The actual number of interspaces may depend upon a length of the fuel line 10 required to fluidically connect the fuel supply unit 20 to the engine unit 30. Moreover, the above descriptions of the operation of the first to fourth rupture discs 15a, 15b, 15c, 15d and first and second interspaces 13a, 13b may be extrapolated to any number of such rupture discs and corresponding interspaces comprised in the fuel line 10. Indeed, each interspace may be associated with only one rupture disc, or more than two rupture discs, openable to fluidically connect the respective interspace and the inner region 14. A longer fuel line 10 may comprise more interspaces and/or rupture discs, which may reduce a likelihood of the effects of a rupture of the inner wall 11 propagating along the fuel line 10 to other components of the fuel system 2.

The first and second interspaces 13a, 13b described above are annular, but may be any other suitable shape in other examples. Moreover, while the pairs of rupture discs for each interspace are described and shown as being diametrically opposed across the inner region 14, the rupture discs may be arranged in any other suitable manner in other examples, such as adjacent each other on the same side of the inner wall 11. The plural rupture discs for a given interspace are here different types of rupture disc, such as rupture discs from different manufacturers, to provide improved redundancy and to reduce the likelihood of a single-point of failure. In other examples, however, the plural rupture discs for a given interspace may be the same type of rupture discs. The rupture discs for each interface described above also rupture at the same threshold differential pressure. In other examples, one rupture disc for a given interspace may rupture at a higher threshold differential pressure than another rupture disc for the interspace. This may similarly provide improved redundancy by permitting a progression of ruptures of respective rupture discs in response to further increases in the pressure differential, such as in the event that a rupture of one rupture disc is insufficient to relieve the pressure differential.

In some examples, pressure relief valves similar to the first and second pressure relief valves 32a, 32b are fluidically coupled to the fuel line 10, such as directly to the inner region 14, or are provided in the fuel supply unit 20, such as upstream and/or downstream of the centrifugal pump 25 and/or the first isolator 24. Such pressure relief valves may be provided alternatively to, or in addition to, the first and second pressure relief valves 32a, 32b. In some examples, the centrifugal pump 25 is any other suitable type of pump, such as a gear pump or piston pump.

It will be appreciated that the principles described above may be applied to any suitable system in which one or more interspaces are defined between respective pairs of walls, such as in the double-wall fuel tank 5 described above, or in other systems comprising more than two walls. In particular, such rupture discs may be provided to fluidically couple any two spaces (e.g., a flow path and an interspace, a storage space and an interspace, or two interspaces), at either side of a wall, when a pressure in a first one of the spaces is caused to exceed that in the other space by a certain amount, particularly where a pressure in the first one of the spaces is lower than, or equal to, a pressure in the other space during normal use.

It is to be noted that the term "or" as used herein is to be interpreted to mean "and/or", unless expressly stated otherwise.

## Claims

1. A double-wall pipe for an aircraft fuel system, the double-wall pipe comprising:
an inner wall defining a first open end, a second open end, and an inner region connecting the first open end to the second open end and via which a fuel is flowable through the double-wall pipe, in use;
an outer wall disposed at least in part around the inner wall to define an interspace, between the inner wall and the outer wall, that is fluidically isolated from the inner region; and
at least one barrier that is openable to create a passage that fluidically connects the interspace to the inner region;
wherein the at least one barrier is configured to open when a pressure in the interspace is higher than a pressure in the inner region.

2. The double-wall pipe of claim 1, wherein the barrier is configured to open when the pressure in the interspace is higher than the pressure in the inner region by an amount greater than a threshold pressure difference.

3. The double-wall pipe of claim 2, wherein the barrier is configured to remain closed when the pressure in the inner region is greater than the pressure in the interspace by an amount equal to or greater than the threshold pressure difference.

4. The double-wall pipe of claim 2 or claim 3, wherein the threshold pressure difference is lower than a burst pressure difference between the interspace and an outer region surrounding the outer wall.

5. The double-wall pipe of any one of claims 1 to 4, wherein the at least one barrier comprises a rupturable barrier.

6. The double-wall pipe of any one of claims 1 to 5, wherein the at least one barrier comprises a rupture disc.

7. The double-wall pipe of any one of claims 1 to 6, wherein a vacuum, or partial vacuum, is present in the interspace.

8. The double-wall pipe of any one of claims 1 to 7, wherein the at least one barrier comprises a plurality of barriers, and wherein each one of the plurality of barriers is openable to create a respective passage that fluidically connects the interspace to the inner region.

9. The double-wall pipe of any one of claims 1 to 8, wherein the interspace is a first interspace, and the outer wall defines a second interspace, between the inner wall and the outer wall, that is fluidically isolated from the inner region and the first interspace.

10. The double-wall pipe of claim 9, wherein the at least one barrier comprises at least one first-interspace barrier, the passage comprises a first-interspace passage that fluidically connects the first interspace to the inner region, and the double-wall pipe comprises at least one second-interspace barrier that is openable to create a second-interspace passage that fluidically connects the second interspace to the inner region.

11. The double-wall pipe of claim 9 or claim 10, wherein the outer wall defines one or more further interspaces, between the inner wall and the outer wall, wherein the, or each, further interspace is fluidically isolated from the inner region.

12. An aircraft fuel system comprising:
a fuel tank for storing fuel for an engine of an aircraft; and
the double-wall pipe of any one of claims 1 to 11 fluidically connected, or connectable, to the fuel tank.

13. The aircraft fuel system of claim 12, comprising at least one pressure relief valve configured to fluidically connect the inner region to an atmosphere external to the double-wall pipe.

14. The aircraft fuel system of claim 12 or claim 13, comprising liquid hydrogen fuel in the fuel tank.

15. An aircraft comprising the double-wall pipe of any one of claims 1 to 11, or the aircraft fuel system of any one of claims 12 to 14.
